# EUROPÄISCHE PATENTSCHRIFT

(11) **EP 1 861 294 B1**
(45) Veröffentlichungstag und Bekanntmachung des Hinweises auf die Patenterteilung: **04.07.2018**
(21) Anmeldenummer: 06707868.3
(22) Anmeldetag: 27.01.2006
(51) Int. Cl.: B60R 21/01, F42D 1/055

(54) **SICHERHEITSSYSTEM FÜR FAHRZEUGINSASSEN**
SAFETY SYSTEM FOR PASSENGERS OF A VEHICLE
SYSTEME DE SECURITE POUR DES PASSAGERS D'UN VEHICULE

(30) Priorität: 11.03.2005 DE 102005011242
(43) Veröffentlichungstag der Anmeldung: 05.12.2007
(73) Patentinhaber: ROBERT BOSCH GMBH, 70442 Stuttgart (DE)
(72) Erfinder: SCHUMACHER, Hartmut, 71691 Freiberg (DE); KARNER, Rüdiger, 70806 Kornwestheim (DE)
(86) Internationale Anmeldenummer: PCT/EP2006/050484
(87) Internationale Veröffentlichungsnummer: WO 2006/094859

(56) Entgegenhaltungen:
- DE-A1- 10 054 681
- DE-A1- 10 233 587
- DE-C1- 19 752 622

## Beschreibung

### Stand der Technik

Die Erfindung betrifft ein Sicherheitssystem für Fahrzeuginsassen nach dem Oberbegriff des Anspruchs 1. Ein Sicherheitssystem der gattungsgemäßen Art ist beispielsweise aus dem Aufsatz von W. Suchowerskyj "Evolution en matiere de detecteurs de choc" in 1141 Ingenieurs de l'Automobile (1982) No.6, Seiten 69 bis 77 Paris, bekannt. Das Sicherheitssystem umfasst wenigstens einen Sensor, insbesondere einen für Beschleunigungen empfindlichen Sensor, ein Steuergerät, sowie Rückhaltemittel, wie Airbags und Gurtstraffer. Moderne Sicherheitssysteme verfügen über mehrstufig auslösbare Airbags. Je nach Unfallsituation werden nur einzelne Stufen oder alle Stufen gezündet. Aus Sicherheitsgründen kann eine Zündung nur dann erfolgen, wenn Schaltmittel in Verbindung mit dem Steuergerät die entsprechenden Zündkreise freigeschaltet oder freigegeben haben. In vielen Sicherheitssystemen erfolgt diese Freigabe nur für ein vergleichsweise kurzes Zeitintervall, das in der Größenordnung einiger 10 ms liegt. Falls bei mehrstufig auslösbaren Airbags nur eine Stufe gezündet hat und wenigstens eine Stufe noch aktivierbar ist, bedeutet dies en Gefährdungspotential für Rettungskräfte am Unfallort oder Wartungspersonal in der Werkstatt, da bei einem unfallgeschädigten Fahrzeug eine unkontrollierte Auslösung dieser noch aktivierbaren Stufe oder Stufen nicht mit Sicherheit ausgeschlossen werden kann. Die völlig unerwartete Auslösung eines Rückhaltemittels, insbesondere eines Airbag kann aber bei nicht darauf vorbereitetem Rettungs- und/oder Wartungspersonal zu Verletzungen führen. Weiterhin besteht auch bei mit einem Gurtkraftbegrenzer ausgestatteten Gurtstraffer die Forderung, den Gurtkraftbegrenzer erst nach Ablauf einer gewissen Zeit nach Auslösen des Gurtstraffers zu aktivieren. Um diese Forderungen zu erfüllen, wird bei bekannten Systemen eine Freigabeverlängerung für die Zündkreise manuell eingegeben. Die manuelle Eingabe beeinflusst ein Rechenprogramm, das für die Steuerung der Zündkreise zuständig ist. Bei diesem bekannten System kann nicht mit letzter Sicherheit ausgeschlossen werden, dass ein Schutz vor einer ungewollten Auslösung eines Rückhaltemittels durch eine unbeabsichtigte Eingabe eines zu langen Freigabeintervalls vermindert wird. Da weiterhin die Freigabeverlängerung nur einmalig innerhalb einer Freigabesequenz erfolgt, kann ein ungünstig gewählter Auslösezeitpunkt in nachteiliger Weise dazu führen, dass nachfolgende Stufen nicht ausgelöst werden, obwohl die Schwere des Unfalls dies eigentlich erfordert.

Aus der gattungsbildenden DE 100 54 681 A1 ist eine Einrichtung zum Auslösen von Airbags bekannt, die ein Auslösegerät umfasst, mit dem eine zwangsweise Airbagauslösung ohne vorhandene Unfallsituation durchführbar ist. Sämtliche in einem Fahrzeug eingebauten Airbags lassen sich in einer vorgegebenen zeitlichen Abfolge oder auch gleichzeitig auslösen.

Aus der DE 102 33 587 A1 ist ein Verfahren sowie ein Zündgerät zur Durchführung des Verfahrens bekannt, zur Zündung von pyrotechnischen Einrichtungen eines Kraftfahrzeuges, wobei in dem Kraftfahrzeug wenigstens zwei pyrotechnische Einrichtungen mit pyrotechnischen Zündern angeordnet sind, die mit einem Steuerzündsignal angesteuert und dadurch gezündet werden. Erfindungsgemäße erfolgt die Zündung der wenigstens zwei pyrotechnischen Einrichtungen zeitlich nacheinander. Ein zur Durchführung des Verfahrens geeignetes Zündgerät weist eine Bereitstellungseinrichtung für das Steuerzündsignal auf. Das Zündgerät weist wenigstens ein Kontaktelement auf, so dass jedes Kontaktelement mit einem Kontaktgegenelement einer Fahrzeugelektrik verbindbar ist zur Übertragung des wenigstens einen Steuerzündsignal.

### Vorteile der Erfindung

Die Erfindung mit den Merkmalen des Anspruchs 1 ermöglicht einen risikofreieren Umgang mit Fahrzeugen, die mit Aktoren in Gestalt von bei einem Unfall aktivierbaren Rückhaltemitteln ausgerüstet sind. Dadurch, dass das Sicherheitssystem Mittel für die Aktivierung von bei einem nicht aktivierter Aktoren umfasst, kann die Gefahr wesentlich verringert werden, dass ein ggf. noch intakter Airbag sich zu einem unerwünschten Zeitpunkt entfaltet. Beispielsweise dann, wenn an eine Unfallstelle geeilte Rettungskräfte mit der Bergung verletzter Fahrzeuginsassen befasst oder Wartungskräfte mit der Bergung und ggf. Instandsetzung eines verunglückten Fahrzeugs beschäftigt sind. Besondere Vorteile bietet die erfindungsgemäße Lösung auch bei mehrstufig auslösbaren Airbags (so genannten "smart Airbags"). Je nach Unfallschwere kann es dort zur Aktivierung nur einer Stufe kommen, während weitere Stufen nicht aktiviert wurden und ein potentielles Risiko für Bergungskräfte bilden. Besonders vorteilhaft umfassen die genannten Mittel Schaltmittel, die die Endstufen für die Steuerung des wenigstens einen Aktors während einer zweiten Zeitdauer erneut leitend steuern, nachdem eine erste Steuerphase abgelaufen ist, in der die Endstufen leitend gesteuert waren. Dadurch, dass die Entscheidung für eine Freigabeverlängerung bzw. Steuerung in eine leitende Phase unmittelbar an die Zündung eines oder mehrerer frei wählbaren Zündmittel gekoppelt ist, kann eine unnötige Freigabeverlängerung von vornherein ausgeschlossen werden. Da der Zündstrom der primären Zündstufe den Startzeitpunkt der Freigabeverlängerung festlegt, sind auch der richtige Zeitpunkt und die ausreichende Dauer der Freigabe gewährleistet. Besonders vorteilhaft umfasst das Sicherheitssystem Speichermittel für die Speicherung von Informationen über Aktoren, Endstufen und deren Steuerung. Auf diese Weise kann nämlich bei der Initialisierung des Sicherheitssystems festgelegt werden, welche Aktoren und/oder welche Endstufen im Anschluss an eine erste Steuerphase erneut gesteuert werden sollen. Beispielsweise können das insbesondere die mehrstufig steuerbaren Airbags sein. Besonders vorteilhaft ist weiterhin, dass auch Informationen über eine bereits erfolgte zweite Steuerphase gespeichert werden. Auf diese Weise kann verhindert werden, dass bereits wiederholt gesteuerte Aktoren nochmals leitend gesteuert werden. Da diese bei dem zweiten Steuerversuch mit großer Wahrscheinlichkeit bereits aktiviert worden sind, kann durch Verzicht auf einen erneuten Steuerversuch vorteilhaft Energie einer Reserveenergiequelle eingespart werden. Weitere Vorteile eines Verfahrens für die Steuerung eines Sicherheitssystems gehen aus Anspruch 4 und den weiteren Unteransprüchen hervor.

### Zeichnung

Die Erfindung wird nachfolgend unter Bezug auf die Zeichnung näher erläutert. Dabei zeigt
- Figur 1: ein Blockschaltbild eines Sicherheitssystems,
- Figur 2: ein Blockschaltbild eines Sicherheitssystems,
- Figur 3: ein Ablaufdiagramm,
- Figur 4: ein Funktionsdiagramm mit Darstellung eines Zählerstands als Funktion der Zeit,
- Figur 5: ein Blockschaltbild einer Speichereinrichtung.

### Beschreibung der Ausführungsbeispiele

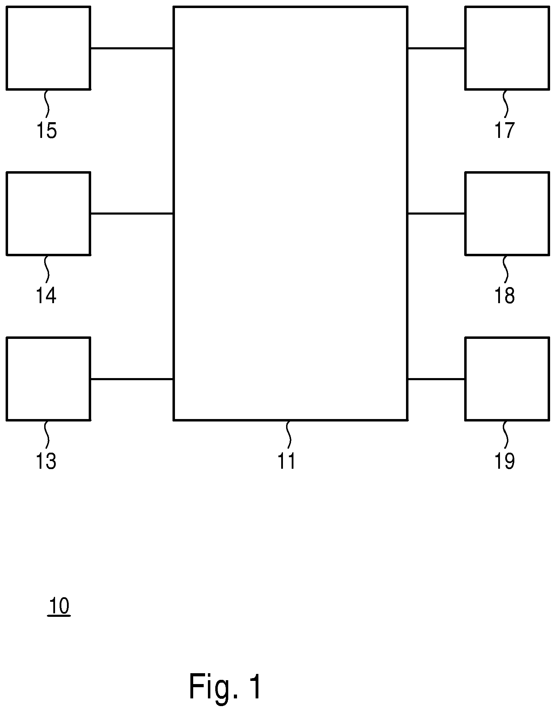

Figur 1 zeigt ein schematisches Blockschaltbild eines Sicherheitssystems für Fahrzeuginsassen 10. Das Sicherheitssystem 10 umfasst Sensoren 13,14,15, die mit einem Steuergerät 11 verbunden sind. Weiterhin umfasst das Sicherheitssystem 10 ebenfalls mit dem Steuergerät 11 verbundene Aktoren 17,18,19. Als Sensoren 13,14,15 werden für Beschleunigung und Druck empfindliche Sensoren eingesetzt, die die genannten Größen bei einem Unfall erfassen. Weiterhin können so genannte Precrashsensoren eingesetzt werden, die mittels Radar, Laser, Ultraschall und Videosensoren das Fahrzeugumfeld erfassen und daher frühzeitig Hinweise auf einen bevorstehenden Crash geben können. Bei den Aktoren handelt es sich um Rückhaltemittel für Fahrzeuginsassen, wie insbesondere Airbags und/oder Gurtstraffer. Das Steuergerät 11 wertet die Ausgangssignale der Sensoren 13,14,15 aus und steuert in Abhängigkeit von diesen Ausgangssignalen die Aktoren 17,18,19.

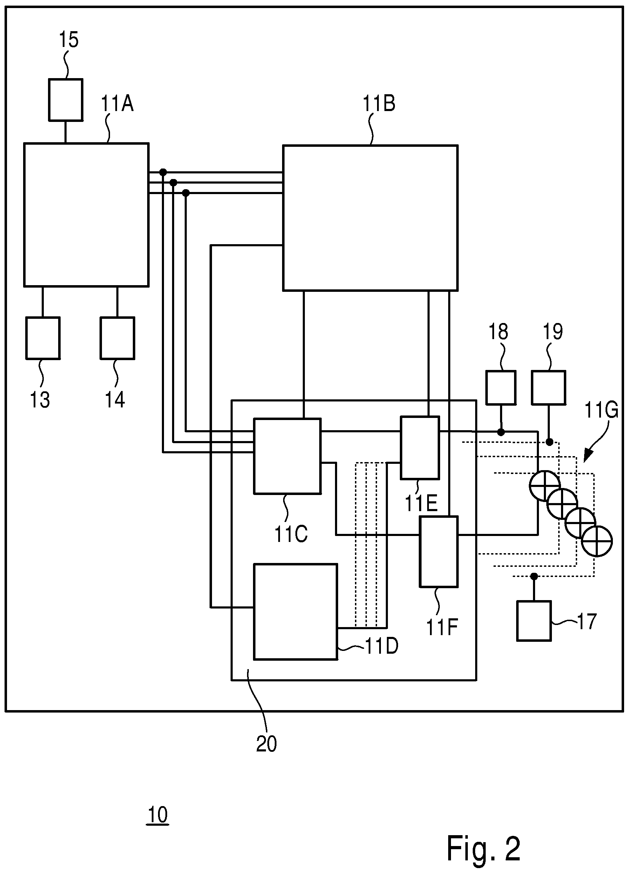

In Figur 2 ist ein etwas detaillierter ausgeführtes Blockschaltbild eines erfindungsgemäß ausgestalteten Sicherheitssystems 10 dargestellt. Mit 13,14,15 sind wiederum Sensoren, mit Bezugsziffern 17,18,19 Aktoren bezeichnet. Das Steuergerät 11 umfasst wenigstens einen Microcontroller 11A. Die Sensoren 13,14,15 sind mit dem Microcontroller 11A verbunden. Das Steuergerät 11 umfasst weiter eine Zündstufenschaltung 20 und eine Sicherheitsschaltung 11B. Der Microcontroller 11A ist mit der Zündstufenschaltung 20 und mit der Sicherheitsschaltung 11B verbunden. Die Sicherheitsschaltung 11B ist mit der Zündstufenschaltung 20 verbunden. Die Zündstufenschaltung 20 ist mit Zündmitteln 11G verbunden. Die Zündmittel 11G wiederum stehen in Wirkverbindung mit Aktoren 17,18,19, wie insbesondere Airbags und/oder Gurtstraffer. Die Zündstufenschaltung 20 umfasst Zündstufen 11E, 11F, die mit je einem Zündmittel 11G eine Serienschaltung bilden. Vorzugsweise sind für jedes Zündmittel 11G zwei Zündstufen 11E und 11F vorgesehen. Die Zündstufe 11E wird auch als HS-Zündstufe (HS = High Side) bezeichnet, da sie zwischen den positiven Pol der Betriebsspannung und ein Zündmittel 11G geschaltet ist. Die Zündstufe 11F wird auch als LS-Zündstufe (LS = Low Side) bezeichnet, da sie zwischen den negativen Pol der Betriebsspannung bzw. Masse und ein Zündmittel 11G geschaltet ist. Als Zündmittel 11G sind üblicherweise so genannte Zündpillen vorgesehen, die durch Stromdurchgang aktiviert werden und dann ihrerseits Treibladungen der Rückhaltemittel aktivieren. Ein Stromdurchgang durch ein Zündmittel 11G findet statt, wenn beide Zündstufen 11E, 11F auf Durchgang geschaltet sind und so einen Stromfluss durch das Zündmittel 11G ermöglichen. Rückhaltemittel, wie insbesondere Airbags, können auch mehrstufig ausgeführt sein, wobei jeder Stufe dann ein eigenes Zündmittel 11G zugeordnet ist. Je nach Schwere des Unfalls werden dann wenigstens eine Stufe oder mehrer Stufen gesteuert, um einen optimalen Schutz zu gewährleisten. Die Zündstufenschaltung 20 umfasst weiterhin eine Steuerschaltung 11C, die eingangsseitig mit dem Microcontroller 11A und der Sicherheitsschaltung 11B verbunden ist. Ausgangsseitig ist die Steuerschaltung 11C mit jeder der Endstufen 11E, 11F verbunden. Weiterhin umfasst die Zündstufenschaltung 20 eine Steuerschaltung 11D, die eingangsseitig mit der Sicherheitsschaltung 11B und ausgangsseitig mit der Endstufe 11E verbunden ist.

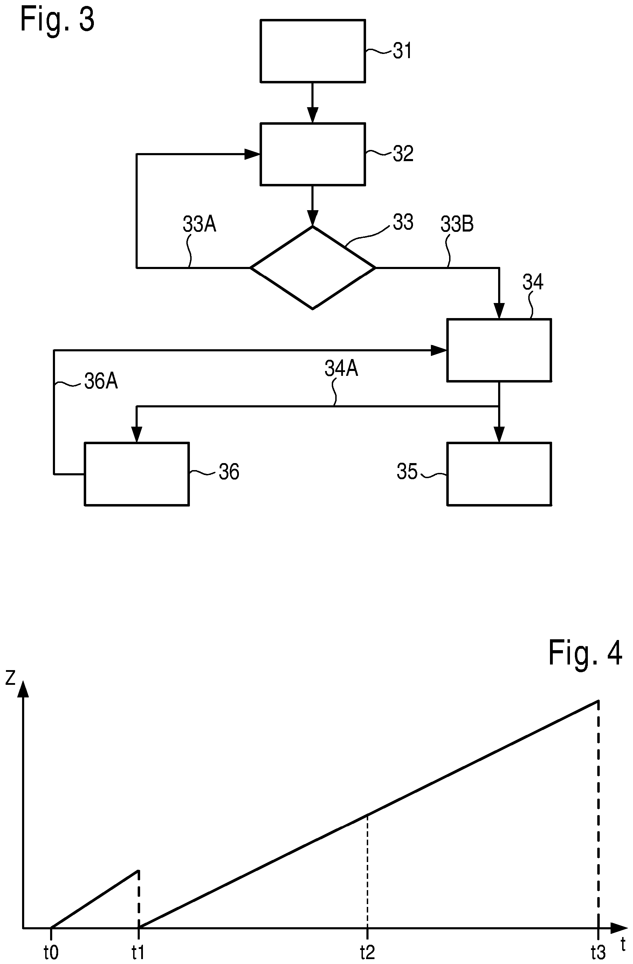

Im Folgenden wird die Funktionsweise des Sicherheitssystems 10 auch unter Bezug auf das in Figur 3 dargestellte Ablaufdiagramm beschrieben. Das Sicherheitssystem 10 wird in der Regel mit dem Start des Fahrzeugs eingeschaltet. Mit dem Einschalten sind auch die Sensoren 13,14,15 aktiv und erfassen insbesondere Beschleunigung (Beschleunigungssensor) , Druck (Drucksensor), sowie Daten aus dem Umfeld des Fahrzeugs (Precrashsensor).Die Ausgangssignale der Sensoren 13,14,15 werden dem Microcontroller 11A des Steuergeräts zugeleitet. Der Microcontroller 11A wertet die Ausgangssignale der Sensoren 13,14,15 aus. Wenn die Auswertung der Ausgangssignale auf eine kritische Unfallsituation schließen lässt, übermittelt der Microcontroller 11A Steuersignale an die Zündstufenschaltung 20 und die Sicherheitsschaltung 11B. Durch diese Steuersignale wird die Sicherheitsschaltung 11B entsperrt und ermöglicht, zusammen mit der Steuerschaltung 11C eine Steuerung der Endstufen 11E und 11F, derart, dass beide Endstufen 11E und 11F leitend geschaltet sind und somit einen Stromfluss durch das Zündmittel 11G ermöglichen, dass mit diesen Endstufen 11E,11F in Serie geschaltet ist. Durch den Stromdurchgang wird das Zündmittel 11G aktiviert und kann somit seinerseits einen Aktor 17,18,19 aktivieren. Dieser Ablauf wird nun, Schritt für Schritt, anhand des in Figur 3 dargestellten Ablaufdiagramms verfolgt. In dem Schritt 31 wird das Sicherheitssystem 10 eingeschaltet. In dem Schritt 32 wird beispielsweise mit dem Sensor 13 die Beschleunigung a gemessen. In dem Schritt 33 wird festgestellt, ob die Beschleunigung a einen vorgebbaren Schwellwert S überschritten hat oder nicht. Ist das nicht der Fall, wird zu dem Schritt 33A verzweigt und es erfolgt eine Rückkehr zu dem Schritt 32, in dem die Beschleunigung a gemessen wird. Hat die Messung der Beschleunigung a ergeben, dass der vorgebbare Schwellwert S überschritten wurde, wird über den Schritt 33B zu dem Schritt 34 übergegangen. In dem Schritt 34 werden mittels der Steuerschaltung 11C und der Sicherheitsschaltung 11B die Endstufen 11E, 11F der Zündstufenschaltung 20 derart gesteuert, dass sie leitend geschaltet sind und somit einen Stromfluss durch ein Zündmitte 11G ermöglichen. In dem Schritt 35 erfolgt dann eine Aktivierung eines Rückhaltemittels (Aktoren 17, 18,19), wie insbesondere eines Airbags und/oder eines Gurtstraffers. Besonders vorteilhaft werden dabei die Endstufen 11E und 11F nur für eine begrenzte Zeit frei geschaltet. Beispielsweise für einige zehn ms, insbesondere 32 ms. Dadurch soll vorteilhaft verhindert werden, dass nach Aktivierung eines Zündmittels 11G weiterhin Strom fließt, was beispielsweise bei einem Kurzschluss des Zündmittels 11G der Fall sein könnte. Ein derart unnötiger Stromfluss würde aber die Reserveenergiequelle unnötig belasten, die bei einem unfallbedingten Abreißen der Fahrzeugbatterie noch als einzige Energiequelle für die Aktivierung weiterer Zündmittel 11G zur Verfügung stünde. Als Reserveenergiequelle werden üblicherweise Kondensatoren mit großer Kapazität eingesetzt. Sobald mit dem Schritt 34 ein Zündstrom zu fließen beginnt, wird gleichzeitig über den Schritt 34A zu dem Schritt 36 übergegangen. In dem Schritt 36 ist die Steuerschaltung 11D aktiv, die den Zündstrom erfasst und auswertet. Sobald diese Steuerschaltung 11D einen durch leitend gesteuerte Endstufen 11E, 11F fließenden Strom innerhalb eines ersten Zeitintervalls erfasst hat, leitet sie ein Steuersignal an die Sicherheitsschaltung 11B. Dieses Steuersignal wird von der Sicherheitsschaltung 11B als Freigabeverlängerungswunsch gedeutet und bewirkt, dass die Sicherheitsschaltung Endstufen 11E, 11F für eine zusätzliche Zeitdauer frei gibt. Dieser Zusammenhang wird durch Figur 4 erläutert. Figur 4 zeigt den Stand eines Zählers Z als Funktion der Zeit t. Vorteilhaft umfasst nämlich in einer Ausführungsvariante der Erfindung die Steuerschaltung 11D einen Zähler Z. Die von der Steuerschaltung 11D abgegebenen Steuersignale sind von dem Stand dieses Zählers Z abhängig. Beispielsweise erfasst die Steuerschaltung 11D im Zeitpunkt t0 einen Stromfluss durch die leitend gesteuerten Endstufen 11E, 11F und der Zähler Z beginnt hochzulaufen. Nach 32 ms ist der Zeitpunkt t1 erreicht und die ursprünglich von der Sicherheitsschaltung 11B vorgesehene Freigabezeit beendet. In diesem Zeitpunkt t1 wird der Stand des Zählers Z zweckmäßig zurückgesetzt. Falls noch nicht aktivierte Zündmittel 11G vorhanden sind, wird jedoch durch ein Steuersignal der Steuerschaltung 11D die Sicherheitsschaltung 11B für ein vorgebbares Zeitintervall t1-t2 oder alternativ t1-t3 entsperrt. In einer vorteilhaften Ausführungsvariante können auch noch unterschiedliche Zeitdauern von beispielsweise 256 ms und 512 ms vorgesehen werden. In diesem zusätzlichen Zeitintervall kann dann über jeweils leitend gesteuerte Endstufen 11E, 11F ggf. nicht aktivierten Zündmitteln 11G ein hinreichend großer Zündstrom zugeführt werden, um diese zu aktivieren. Die aktivierten Zündmittel 11G können dann ggf. noch nicht aktivierte Rückhaltemittel auslösen. Dadurch kann dann jede Gefahr für Rettungskräfte und/oder Wartungspersonal in Werkstätten vermieden werden.

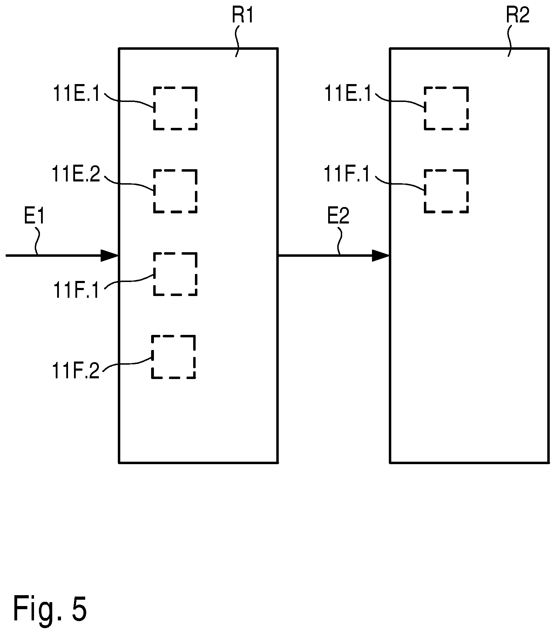

Besonders vorteilhaft umfasst die Zündstufenschaltung 20 erste Register R1 (Figur 5), mit denen diejenigen Endstufen 11E/11F ausgewählt werden, die zu einer Verlängerung der Freigabezeit bei der Sicherheitsschaltung 11B führen sollen. Diese Register werden bei der Initialisierung des Sicherheitssystems 10 programmiert und anschließend verriegelt, um eine nachträgliche Änderung der Programmierung zu verhindern. Weiterhin umfasst die Zündstufenschaltung 20 zweite Register R2, in denen diejenigen Endstufen 11E, 11F markiert werden, bei denen bereits eine Verlängerung der Freigabezeit stattgefunden hat. Diese Register R2 müssen während der Betriebszeit des Sicherheitssystems 10 beschreibbar bleiben, um stattfindende Änderungen aufnehmen zu können. Der Zählerstand Z der in den für eine Verlängerung vorgesehenen Steuerschaltungen 11D angeordneten Zähler wird zweckmäßig auf einen Zählerstand ungleich Null überwacht. Wird aufgrund einer Steuerung der entsprechenden Endstufen 11E, 11F und eines daraus resultierenden Stromflusses durch ein Zündmittel 11G der Zählerstand Z des Zählers erhöht, dann wird der Sicherheitsschaltung 11B ein entsprechendes Steuersignal zugeleitet. Gleichzeitig wird in dem zweiten Register R2 gespeichert, für welche Endstufen 11E, 11F bereits eine Verlängerung der Freigabedauer angefordert ist. Sollte für die betroffenen Endstufen eine weitere Verlängerung angefordert werden, wird diese Anforderung abgelehnt. Dieser Vorgang wird im Folgenden unter Bezug auf Figur 5 verdeutlicht. Figur 5 zeigt ein erstes Register R1 und ein zweites Register R2. Das erste Register R1 ist programmierbar. Bei der Initialisierung des Sicherheitssystems 10 werden dem Register R1 über einen Eingang E1 Informationen darüber zugeführt und in dem Register R1 gespeichert, für welche der Endstufen 11E,11F eine Verlängerung der Freigabezeit vorzusehen ist. Hier kommen vor allem Endstufen mehrstufiger Airbags in Betracht. Bei diesen besteht nämlich ein höheres Risiko dafür, dass bei einem Unfall zunächst nur eine einzige Stufe aktiviert und gezündet wird. Weitere Stufen werden nicht gezündet und stellen unter widrigen Umständen daher ein Risiko für Rettungskräfte und/oder Wartungspersonal dar, die sich dem durch Unfall beschädigten Fahrzeug nähern oder dieses reparieren. In dem in Figur 5 dargestellten Ausführungsbeispiel ist in dem Register R1 gespeichert, dass diese Endstufen 11E.1,11E.2,11F.1 und 11F.2 für eine Verlängerung der Freigabezeit vorgesehen sind. Sobald eine Endstufe 11E, 11F eine verlängerte Freigabezeit erlebt hat, wird eine entsprechende Information in das zweite Register R2 geschrieben (Eingang E2). Dadurch soll verhindert werden, dass diese Endstufen erneut eine Freigabeverlängerung aktivieren. In dem in Figur 5 dargestellten Ausführungsbeispiel handelt es sich um die Endstufen 11E.1 und 11E.2. Diese Endstufen waren also zuvor bereits leitend geschaltet und hatten eine Freigabeverlängerung aktiviert. Durch die Speicherung dieser Information in dem zweiten Register soll nun ausgeschlossen werden, dass diese Endstufen beim nächsten Programmzyklus eine erneute Freigabeverlängerung aktivieren.

Die Erfindung lässt sich vorteilhaft in so genannten Single-Chip-Systemen einsetzen, bei denen sämtliche Komponenten der Sicherheitsschaltung 11B, der Zündstufenschaltung 20 und deren Stromversorgung in hoch integrierter Form auf einem einzigen Halbleiterchip Vereinigt sind. Mit ebenfalls gutem Erfolg ist die erfinderische Lösung aber auch bei so genannten Standardsystemen einsetzbar, bei denen die vorerwähnten Funktionen in getrennten Halbleiterschaltkreisen realisiert sind.

### Bezugszeichenliste

10 Sicherheitssystem
11 Steuergerät
11A Microcontroller
11B Sicherheitsschaltung
11C Steuerschaltung
11D Steuerschaltung
11E Endstufe
11F Endstufe
11G Zündmittel
13 Sensor
14 Sensor
15 Sensor
17 Aktor
18 Aktor
19 Aktor
20 Zündstufe
31 Schritt
32 Schritt
33 Schritt
33A Schritt
33B Schritt
34 Schritt
34A Schritt
35 Schritt
36 Schritt
36A Schritt
R1 Register
R2 Register
t Zeit
t0 Zeitpunkt
t1 Zeitpunkt
t2 Zeitpunkt
t3 Zeitpunkt
Z Zähler

## Patentansprüche

1. Sicherheitssystem (10) für Fahrzeuginsassen mit wenigstens einem Sensor (13, 14, 15), wenigstens einem Aktor (17,18,19) und wenigstens einem Steuergerät (11), und mit Endstufen (11E,11F) für die Steuerung des wenigstens einen Aktors (17, 18, 19), wobei das Sicherheitssystem (10) Mittel für die Aktivierung von durch einen Unfall nicht aktivierter Aktoren (17, 18, 19) umfasst, wobei Schaltmittel (11A, 11B, 11C, 11D) vorgesehen sind, die die Endstufen (11E, 11F) für die Steuerung des wenigstens einen Aktors (17, 18,19) für eine vorgebbare erste Zeitdauer (Freigabezeit) freigeben, **dadurch gekennzeichnet, dass** die Schaltmittel (11A, 11B, 11C, 11D) bei Ablauf der ersten Zeitdauer (t0-t1) die Endstufen (11E, 11F) während einer zweiten Zeitdauer (t1-t2; t1-t3) erneut freigeben.

2. Sicherheitssystem nach einem der vorhergehenden Ansprüche, **dadurch gekennzeichnet, dass** Speichermittel (R1, R2) für die Speicherung von Informationen über gesteuerte Endstufen (11E, 11F) bzw. Aktoren(17, 18,19) vorgesehen sind.

3. Sicherheitssystem nach einem der vorhergehenden Ansprüche, **dadurch gekennzeichnet, dass** die Speichermittel ein erstes Register (R1) und ein zweites Register (R2) umfassen.

4. Verfahren für die Steuerung eines Sicherheitssystems (10) für Fahrzeuginsassen, das Sensoren (13, 14, 15), Aktoren (17, 18, 19) und wenigstens ein Steuergerät (11) umfasst, und bei dem für die Aktivierung von Aktoren (17, 18, 19) ein erstes vorgebbares Zeitintervall (t0-t1) vorgesehen ist, wobei nach Ablauf des vorgebbaren ersten Zeitintervalls (t0-t1) in einem zweiten Zeitintervall (t1-t2; tl-t3) noch nicht aktivierte Aktoren (17, 18, 19) gesteuert werden können, wobei Endstufen (11E, 11F) für die Aktivierung der Aktoren (17, 18,19) für eine vorgebbare erste Zeitdauer (Freigabezeit) freigeben werden, **dadurch gekennzeichnet, dass** bei Ablauf der ersten Zeitdauer (t0-t1) die Endstufen (11E, 11F) während des zweiten Zeitintervalls (t1-t2; t1-t3) erneut freigegeben werde.

5. Verfahren nach einem der vorhergehender Ansprüche, **dadurch gekennzeichnet, dass** das erste Zeitintervall (t0-t1) 32ms beträgt.

6. Verfahren nach einem der vorhergehenden Ansprüche, **dadurch gekennzeichnet, dass** das zweite Zeitintervall (t1-t2) 256ms beträgt.

7. Verfahren nach einem der vorhergehenden Ansprüche, daher gekennzeichnet, dass das zweite Zeitintervall (t1-t3) 512 ms beträgt.

8. Verfahren nach einem der vorhergehenden Ansprüche, **dadurch gekennzeichnet, dass** Informationen über die mit einer längeren Freigabezeit zu steuernden Aktoren (17,18,19) in einem Speichermittel (Register R1) gespeichert werden.

9. Verfahren nach einem der vorhergehenden Ansprüche, **dadurch gekennzeichnet, dass** Informationen über eine längere Freigabezeit gesteuerte Aktoren (17, 18, 19) in einem Speicher (Register 2) gespeichert werden.

## Claims

1. Safety system (10) for vehicle occupants, having at least one sensor (13, 14, 15), at least one actuator (17, 18, 19) and at least one control device (11) and having output stages (11E, 11F) for controlling the at least one actuator (17, 18, 19), wherein the safety system (10) comprises means for activating actuators (17, 18, 19) which are not activated by an accident, wherein switching means (11A, 11B, 11C, 11D) are provided and enable the output stages (11E, 11F) for controlling the at least one actuator (17, 18, 19) for a predefinable first period (enable time), **characterized in that** the switching means (11A, 11B, 11C, 11D) enable the output stages (11E, 11F) again during a second period (t1-t2; t1-t3) upon expiry of the first period (t0-t1).

2. Safety system according to one of the preceding claims, **characterized in that** storage means (R1, R2) for storing information relating to controlled output stages (11E, 11F) and/or actuators (17, 18, 19) are provided.

3. Safety system according to one of the preceding claims, **characterized in that** the storage means comprise a first register (R1) and a second register (R2).

4. Method for controlling a safety system (10) for vehicle occupants, which comprises sensors (13, 14, 15), actuators (17, 18, 19) and at least one control device (11), and in which a first predefinable interval of time (t0-t1) is provided for activating actuators (17, 18, 19), wherein actuators (17, 18, 19) which have not yet been activated can be controlled in a second interval of time (t1-t2; t1-t3) following expiry of the predefinable first interval of time (t0-t1), wherein output stages (11E, 11F) for activating the actuators (17, 18, 19) are enabled for a predefinable first period (enable time), **characterized in that** the output stages (11E, 11F) are enabled again during the second interval of time (t1-t2; t1-t3) upon expiry of the first period (t0-t1).

5. Method according to one of the preceding claims, **characterized in that** the first interval of time (t0-t1) is 32 ms.

6. Method according to one of the preceding claims, **characterized in that** the second interval of time (t1-t2) is 256 ms.

7. Method according to one of the preceding claims, **characterized in that** the second interval of time (t1-t3) is 512 ms.

8. Method according to one of the preceding claims, **characterized in that** information relating to the actuators (17, 18, 19) to be controlled with a longer enable time is stored in a storage means (register R1).

9. Method according to one of the preceding claims, **characterized in that** information relating to actuators (17, 18, 19) controlled for a longer enable time is stored in a store (register 2).

## Revendications

1. Système de sécurité (10) pour des passagers d'un véhicule, comprenant au moins un capteur (13, 14, 15), au moins un actionneur (17, 18, 19) et au moins un appareil de commande (11), et comprenant des étages finaux (11E, 11F) destinés à commander ledit au moins un actionneur (17, 18, 19), dans lequel le système de sécurité (10) comprend des moyens destinés à activer des actionneurs (17, 18, 19) non activés par un accident, dans lequel il est prévu des moyens de commutation (11A, 118, 11C, 110) qui déclenchent les étages finaux (11E, 11F) pour commander au moins un actionneur (17, 18, 19) pendant une première période de temps pouvant être prédéterminée (temps de déclenchement), **caractérisé en ce que** les moyens de commutation (11A, 118, 11C, 11D) déclenchent à nouveau les étages finaux (11E, 11F) pendant une seconde période de temps (t1-t2 ; t1-t3) à la fin de la première période de temps (t0-t1).

2. Système de sécurité selon l'une des revendications précédentes, **caractérisé en ce qu'**il est prévu des moyens de stockage (R1, R2) destinés à stocker des informations concernant des étages finaux commandés (11E, 11F) ou des actionneurs (17, 18, 19).

3. Système de sécurité selon l'une des revendications précédentes, **caractérisé en ce que** les moyens de stockage comprennent un premier registre (R1) et un second registre (R2).

4. Procédé de commande d'un système de sécurité (10) pour des passagers d'un véhicule, comprenant des capteurs (13, 14, 15), des actionneurs (17, 18, 19) et au moins un appareil de commande (11), et dans lequel il est prévu un premier intervalle de temps pouvant être prédéterminé (t0-t1) pour activer des actionneurs (17, 18, 19), dans lequel, après expiration du premier intervalle de temps pouvant être prédéterminé (t0-t1), il est possible de commander des actionneurs (17, 18, 19) qui n'ont pas encore été activés au cours d'un second intervalle de temps (t1-t2 ; t1-t3), dans lequel des étages finaux (11E, 11F) sont déclenchés pour activer les actionneurs (17, 18, 19) pendant une première période de temps pouvant être prédéterminée (temps de déclenchement), **caractérisé en ce qu'**à l'expiration de la première période de temps (t0-t1), les étages finaux (11E, 11F) sont à nouveau déclenchés pendant le second intervalle de temps (t1-t2 ; t1-t3).

5. Procédé selon l'une des revendications précédentes, **caractérisé en ce que** le premier intervalle de temps (t0-t1) est de 32 ms.

6. Procédé selon l'une des revendications précédentes, **caractérisé en ce que** le second intervalle de temps (t1-t2) est de 256 ms.

7. Procédé selon l'une des revendications précédentes, **caractérisé en ce que** le second intervalle de temps (t1-t3) est de 512 ms.

8. Procédé selon l'une des revendications précédentes, **caractérisé en ce que** des informations concernant les actionneurs (17, 18, 19) devant être commandés avec un temps de déclenchement plus long sont stockées dans un moyen de stockage (registre R1).

9. Procédé selon l'une des revendications précédentes, **caractérisé en ce que** des informations concernant des actionneurs (17, 18, 19) commandés avec un temps de déclenchement plus long sont stockées dans une mémoire (registre 2).
